# EUROPEAN PATENT SPECIFICATION

(11) **EP 3 055 194 B1**
(45) Date of publication and mention of the grant of the patent: **28.11.2018**
(21) Application number: 14851935.8
(22) Date of filing: 06.10.2014
(51) Int. Cl.: B62D 55/065, B62D 55/10, B62D 55/112, B62D 55/084, B62D 55/125

(54) **ARRANGEMENT FOR A TERRAIN-GOING MOTOR VEHICLE AND A TERRAIN-GOING MOTOR VEHICLE EQUIPPED WITH SUCH AN ARRANGEMENT**
ANORDNUNG FÜR EIN GELÄNDEKRAFTFAHRZEUG UND GELÄNDEKRAFTFAHRZEUG MIT SOLCH EINER ANORDNUNG
ARRANGEMENT POUR UN VÉHICULE MOTORISÉ TOUT TERRAIN ET UN VÉHICULE MOTORISÉ TOUT TERRAIN ÉQUIPÉ D'UN TEL ARRANGEMENT

(30) Priority: 10.10.2013 SE 1351203
(43) Date of publication of application: 17.08.2016
(73) Proprietor: Komatsu Forest AB, 907 04 Umea (SE)
(72) Inventor: BOSTRÖM, Ola, S-907 88 Täfteå (SE)
(74) Representative: Zacco Sweden AB
(86) International application number: PCT/SE2014/051153
(87) International publication number: WO 2015/053689

(56) References cited:
- EP-A1- 1 451 060
- EP-A2- 1 060 978
- WO-A1-2006/128284
- WO-A1-2006/128284
- WO-A1-2009/040472
- WO-A1-2013/000514
- SE-C1- 194 059
- US-A- 5 452 949
- US-A- 5 452 949
- US-A1- 2004 216 932
- US-A1- 2004 216 932
- US-A1- 2011 037 311
- US-A1- 2011 037 311

## Description

The present invention concerns an arrangement for a terrain-going motor vehicle, in particular a forestry machine, according to the introduction to claim 1. The invention concerns also a terrain-going motor vehicle, in particular a forestry machine, equipped with such an arrangement according to the introduction to claim 6.

A modern terrain-going motor vehicle, in particular a forestry machine, demonstrates a chassis with forward and rear framework sections that are joined to each other through a central articulated joint, which has a vertical axis and allows the vehicle to pivot by changing the angle between the framework sections. For a forestry machine of what is known as "harvester type", which is used to fell, trim and cross-cut trees to logs, the forward framework section may be equipped with a driver's cabin and a crane, which crane can be rotated around a vertical axis and supports a tree harvester unit. The driver's cabin and the crane can pivot in the horizontal plane and normally move together during pivoting. With the aid of the crane, the tree harvester unit can be extended far from the machine, and it can be angled and displaced to different positions. The rear framework section is normally equipped with the source of power or engine of the machine. A forestry machine is normally equipped with two or more pairs of wheels. A further frequently used forestry machine is constituted by what is known as a "forwarder", which has a driver's cabin and engine in a forward framework section and a load compartment with an associated crane in a rear framework section. The forwarder is used for terrain transport, known as the "forwarding" of timber, from a felling site in terrain without roads to a collection site in connection with a road to which a timber lorry has access. What is common for the type of terrain-going machine that is described here is that such machines have an articulated frame and are equipped with a crane and grip to handle timber. For reasons of simplicity such machines will be referred to in this document as "forestry machines".

Not only single wheel axles but also bogies with wheel axles mounted in pairs are used to support the forestry machine in a manner that allows it to be driven, and to transfer mechanical force from the source of power of the forestry machine down to the ground, in order to drive and displace the forestry machine forwards. The term "bogie" will be used below to denote a type of auxiliary chassis, i.e. a supporting framework that can be rotated and that comprises two or more pairs of wheels, wheel axles, and that supports the chassis of the forestry machine. Such a bogie framework demonstrates both longitudinal and transverse beams, relative to the longitudinal axis of the forestry machine. The framework of the bogie is mounted to pivot in the framework section of the vehicle through a centrally located transverse axis. A bogie may be an advanced driving type, known as a "driving bogie" with distribution boxes for the transfer of power, or it may be of a simple coasting type known as a "running bogie". It may be also a combination of these two types. What is characteristic of a bogie is that it unites two or more wheel axles through the longitudinal beams of the bogie framework, which, by pivoting around the transverse axis, can act as double-armed levers with the ability to equalise vertical forces and inequalities that may arise at the forward and rear wheels of the bogie.

A forestry machine that lacks a bogie is equipped with first and second simple two-wheeled axles, one axle of which is normally mounted fixed or attached to one of the framework sections while the second axle is mounted to "oscillate", i.e. mounted to pivot at the second framework section with the ability to carry out oscillations in a direction that is transverse to the longitudinal axis of the forestry machine. Due to the combination of the fixed wheel axle and the said oscillating wheel axle, the forestry machine acquires good driving properties. Among the disadvantages of a bogie can be mentioned that it contributes unnecessary weight to the forestry machine, contributes to increased damage to the ground, and means that the forestry machine as a unit becomes more expensive, while a bogie as one component is regarded as being expensive. It should be mentioned that also articulated forestry machines are available that have a combination of a simple wheel axle on one of the framework sections and a bogie on the second framework section, whereby the bogie is normally placed on the framework section that supports the crane arm in order in this way to distribute vertical loads that arise across a larger area at the ground, in particular when the crane is in its extended condition.

Modern forestry places a number of demands on forestry machines and similar terrain-going vehicles. In order to work efficiently, modern forestry machines are equipped with powerful engines with which the machines can be rapidly displaced between different locations. Further, a forestry machine must be well-balanced in order to be able to be driven in terrain that can vary, with respect to both the strength of the ground and the nature of the surrounding vegetation, with terrain that may be alternating between open, closed, flat or steeply sloping. The machines must be stable at the same time as they must be able to move easily in the terrain. The ground may in certain cases be hard and stony, while in other cases it may be constituted by marshland with a very low support strength. When working with long extensions of the crane arm of the forestry machine, the centre of gravity is displaced from the centre of the forestry machine and outwards to any one of the wheels over which the crane arm is extended. If the forestry machine is located on ground with limited support strength, the stability of the machine may be negatively affected, whereby the wheels of the forestry machine may risk sinking down into the ground. When working on ground with very low strength and with significant displacements of the centre of gravity, there is a risk, in the worst case, that the forestry machine tips over or becomes stuck.

Ever-increasing demands have been placed on this type of terrain-going machine in the recent period - that they are to be gentle on the ground while they have at the same time increased in weight. The machines must not tear up the undergrowth or damage the root systems of the trees. Sliding or slipping between the ground and the pairs of wheels of the machine must not take place, either, nor may deep wheel tracks be formed in the ground.

In order to cope with all of these conceivable types of ground, forestry machines have until now been equipped with bogies whose frameworks demonstrate two pairs of wheels, which may be connect during tracked-wheel motion. Due to the said bogie, the forestry machine achieves the desired stability and pressure against the ground. While it is true that the said bogie assembly solves the problems described above, it has the disadvantage that the forestry machine not only becomes significantly more expensive and heavier as a result of its complexity, but also significantly more difficult to manoeuvre, since the long tracks that run around the bogie attempt to straighten the radius of pivot of the forestry machine when it is angled across the central articulated joint. The manoeuvrability of the forestry machine and its ability to make sharp turns are in this way limited.

It is previously known to equip terrain-going vehicles of older, non-articulated type, i.e. of the type that demonstrates an inflexible frame with forward steerable wheels, in particular a tractor with a half-tracker arrangement. See, for example, SE 194 059, whereby a track runs over a combination of a driving wheel on a wheel axle and a free (not driven) tracker wheel arranged at the end of a pivotable arm that can pivot relative to the axis of the driving wheel around an axis that is parallel to the said driving wheel axle.

Such a half-tracker arrangement differs from a bogie principally in that the half-tracker arrangement lacks a bogie frame, and thus does not allow vertical forces to be transferred between the forward and rear wheel axles. With the said known half-tracker arrangements, a tracker wheel is vertically mounted to pivot joined to the vehicle through a pivot arm that is attached to the vehicle, and one track is positioned around the said tracker wheel and the driving rear wheels of the vehicle (the tractor). The tracker wheel is driven downwards towards the ground with a constant force through a spring means. In a known half-tracker arrangement, the tracker wheel is directed in towards the machine and located between the driving rear wheels and the steering front wheels of the tractor. Such an articulated forestry machine is disclosed in the EP1060978 which discloses the features of the preamble of claims 1 and 6,- and is considered to be closest prior art.

An articulated forestry machine with single wheel axles of the type that has been described in the introduction demonstrates a number of advantages, including good manoeuvrability, but it suffers from the problem that it lacks the stability and the low ground pressure that are desirable when carrying out forestry operations on ground with limited support strength. It should be realised that the space in the central articulated joint between the forward and rear framework sections, set at an angle to each other, of an articulated forestry machine is limited, in particular when the machine is turning, and it does not normally, therefore, allow the mounting of half-tracker arrangements of the type specified above, with tracker wheels that are located centrally between the wheel axles.

A first purpose of the present invention is, therefore, to achieve an arrangement at a terrain-going articulated vehicle with single wheel axles that makes it possible to adapt in an efficient manner the ground pressure of the vehicle to the relevant support strength of the ground and the currently prevalent conditions. The possibility to adapt the ground pressure of the vehicle is, in many cases, desirable. This is so, for example, when it is a case of driving on ground with high support strength, but where the properties of the terrain mean that the requirement for good manoeuvrability of the vehicle is greater than the requirement for low ground pressure. By allowing the ground pressure of the vehicle to increase temporarily - to vary, in principle, between four and eight supporting wheels - the manoeuvrability can be improved, or the requirement for space to manoeuvre can be reduced.

The possibility of adapting the ground pressure of the vehicle means that problems with ground damage in the form of the formation of tracks and damage from compaction when driving across forestry land with limited support strength can be reduced, and that the machine stability can be increased when required. It is desirable also to achieve a terrain-going vehicle where the ground pressure can be distributed in a simple and flexible manner between the front and rear sections of the machine. As an example, the case can be mentioned in which it is a matter of a harvester, where there is often a requirement of low ground pressure in order to offer good stability at the forward framework section where the crane is located, while the ground pressure at the rear framework section where the drive motor is located is of less significance and can be varied in order to achieve the desired driving properties of the machine.

A second purpose of the invention is to achieve a terrain-going vehicle, in particular a forestry machine that by comprising an arrangement according to the invention offers flexibility with respect to the regulation of ground pressure and manoeuvrability, as described above.

These purposes of the invention are achieved through an arrangement that demonstrates the distinctive features and characteristics that are specified in claim 1, and an articulated terrain-going vehicle of the type that is specified in claim 6. Further advantages of the invention are made clear by the non-independent claims.

Among the major advantages of the invention can be mentioned that it makes it possible to adapt in a flexible manner the ground pressure of the machine according to the currently prevalent conditions, and to offer a ground pressure that is comparable to that of a significantly more expensive and more complicated bogie, without, however, noticeably increasing the weight of the machine. Furthermore, the invention contributes to achieving a machine whose stability is so good that the crane can work within a large working area without the requirement for water-filled tyres, for a further weight increase of the machine. Through the arrangement according to the invention, a terrain-going forestry machine is achieved whose ground pressure can be regulated and adapted in an efficient manner to the relevant support strength of the ground, which means that the effective degree of exploitation of a forestry machine equipped with the driving arrangement can be significantly improved. Furthermore, the arrangement according to the invention can be arranged as equipment delivered from the factory or as a kit that can be post-mounted onto an existing forestry machine.

The invention will be described in more detail below with reference to the attached drawings, of which:
Figure 1 shows a side view of a forestry machine, in the form of what is known as "harvester", equipped with an arrangement according to the invention;
Figures 2a and 2b show schematically in a side view and a plan view, respectively, the working method of an arrangement according to the invention;
Figure 3 shows schematically a hydraulic connection diagram set into a first A, a second B and a third operating condition C of the piston-cylinder device that is used to operate in a vertical direction and to press downwards with a pressure a pivotable arm against the ground, which pivotable arm is a component of the arrangement according to the invention;
Figure 4 shows a diagram that illustrates schematically how the ground pressure projected against the ground for a wheel of a forestry machine equipped with an arrangement according to the invention varies with the arrangement set to different angles between α=0° (an upper inactive position) to α=50° (an operating condition);
Figure 5a shows in perspective one end of a wheel axle that is a component of an arrangement in a first execution according to the invention with a radially operating bearing attached at the wheel axle;
Figure 5b shows a radial cross-section through the bearing in Figure 5a;
Figure 6a shows in perspective one end of a wheel axle that is a component of an arrangement in a second execution according to the invention with a radially operating bearing attached at the wheel axle;
Figure 6b shows a radial cross-section through the bearing in Figure 6a.

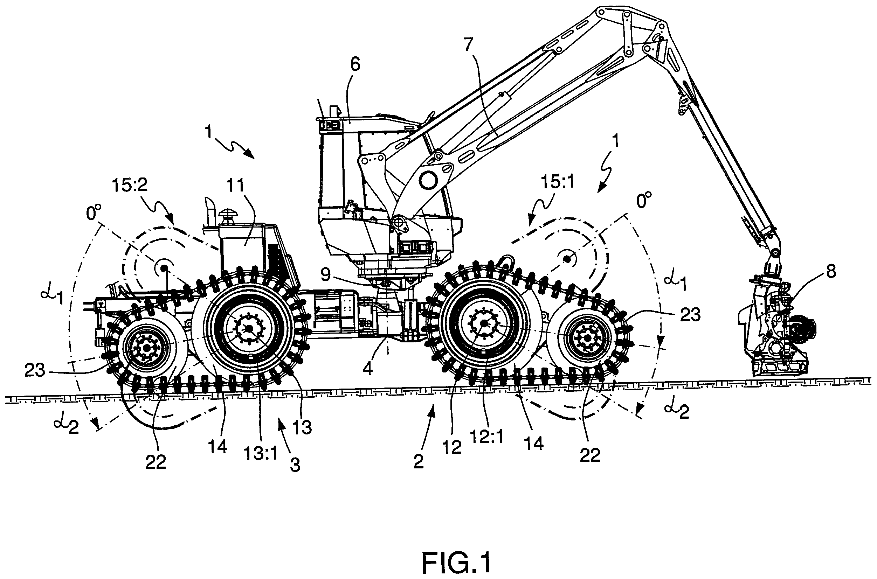

In Figure 1, reference number 1 generally denotes a terrain-going motor vehicle, a forestry machine in the form of a harvester, which is of what is known as "articulated" type and which demonstrates a chassis with forward and rear framework sections 2, 3 that are united to each other through a central articulated joint 4. The vehicle turns by forming an angle around a vertical axis between the said framework sections. The forward framework section 2 supports a cabin 6 and a crane arm 7 that supports at its free end a tree-processing unit in the form of a harvester 8. The cabin 6 and the crane arm 7 are supported on a turntable 9 for common rotation around a vertical axis. The rear framework section 3 supports a source of power 11 in the form of a diesel engine. The chassis of the vehicle has an undercarriage with a pair of single wheel axles that extend in opposing directions from a central differential gear for the driving of two wheels, whereby a first fixed mounted wheel axle 12 carries the forward framework section 2 and a second "oscillating" suspended wheel axle 13 carries the rear framework section 3. The two wheel axles are driven in known manner each by means of a propulsion with a drive shaft coupled to the said differential gear that is a component of the relevant wheel axle (not shown in the drawings). It should be realised that each wheel axle 12, 13 comprises a pair of two driving wheels 12:1 and 13:1, respectively, with pneumatic air-filled tyres 14 that are located at a certain distance from each other in the direction that is defined by the axis of rotation of the wheel. The term "chassis" is here used to denote the frame that constitutes the complete undercarriage of the vehicle and includes not only the framework section but also the wheel axles with wheels and control arrangements.

The vehicle 1 is equipped with an arrangement according to the invention at both its rear end and its forward end. This arrangement includes first and second half-track units 15:1, 15:2 arranged at the driven wheel axles 12, 13, respectively, with parallel half-track assemblies 15 located at a sideways distance from each. The half-track units 15:1 and 15:2 are directed forwards and backwards, respectively, along the longitudinal direction of the machine, and are thus oriented in the longitudinal direction out from the machine with respect to its central articulated joint. The vehicle comprises a total of four half-track assemblies 15, which in the form of the half-track units described above are arranged in pairs at the wheel axles 12, 13, two directed backwards and two directed forwards in the direction of travel of the vehicle. Each such half-track assembly 15 is arranged for interaction with a driving wheel 12:1; 13:1, or to be more precise, with a driving wheel tyre 14. The half-track assemblies 15 that together form the said pair of forwards and backwards directed half-track units 15:1 and 15:2, respectively, can pivot, independently of each other or pairwise together, upwards and downwards in a vertical plane between an upper upwardly directed inactive position and an active downwardly directed working position, as is illustrated with dash-dot lines in Figure 1.

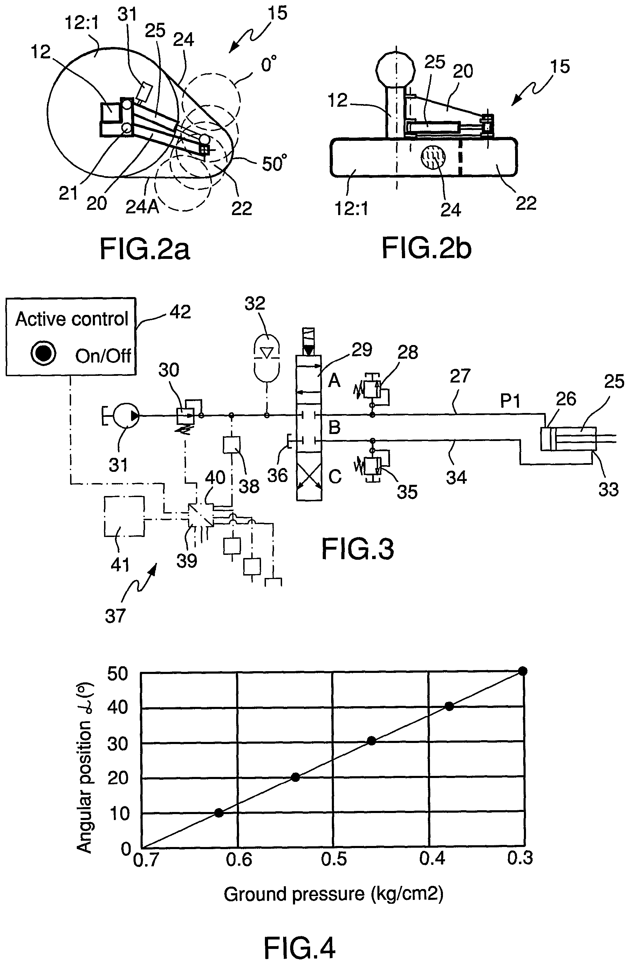

As is best made clear by Figures 2a and 2b, each half-track assembly 15 comprises a pivotable arm 20 that is radially extended from the wheel axle 12 and that is mounted to pivot at one of its ends through a bearing 21 at the wheel axle 12 of the forestry machine 1, such that the pivotable arm extends out from the machine in its longitudinal direction. The pivotable arm 20 supports at its free second end a tracker wheel 22 that is mounted to rotate in bearings and that has a pneumatic air-filled tyre 23. The tracker wheel 22 can pivot on the pivotable arm 20 relative to the wheel axle 12 around an axis that is parallel to the wheel axle but is located at a radial distance from it, such that the tracker wheel can move in the arc of a circle relative to the wheel axle 12 in the centre of a driving wheel 12:1.

Since the four half-track assemblies 15 are identical, only one of these half-track assemblies will, for the sake of simplicity, be described in more detail below.

Once again with reference to Figures 2a and 2b, each half-track assembly 15 comprises a track 24 with a girdle that forms an open running surface defined by longitudinal and transverse ribs. The track 24 runs over the air-filled tyre 14 of the driving wheel 12:1 and the tyre 23, also air-filled, of the freely running tracker wheel 22. With the aid of a piston-cylinder device 25, that acts between the wheel axle 12 and the pivotable arm 20, the said pivotable arm, and thus also the tracker wheel 22, can be pivoted in the arc of a circle through an angle upwards and downwards in the vertical plane between an upper upwardly directed inactive position and an active downwardly directed working position. The angle between the upper inactive position and the lower working position is denoted by α1 in Figure 1.

Figure 3 shows, in the form of a connection diagram, a hydraulic circuit that can be used for the operation of the relevant half-track assembly 15 and that allows the piston-cylinder device 25 to be placed under a pre-determined pressure P1 to maintain the desired contact of the tracker wheel 22, and thus the desired contact between the tracker wheel and part 24A of the track 24 that is active between the tracker wheel and the driving wheel of the wheel axle, with force against the ground. The piston-cylinder device 25 further allows the tracker wheel 22 to be lifted up to the upper inactive position shown in Figure 1 by a dot-dash line, and lowered to the lower operating position.

The piston-cylinder device 25 comprises a double-action hydraulic cylinder that has a connection 26 to a first chamber, which connection is, through a line 27 with a bypass valve 28, an electrical positional valve 29, and a pressure regulation means 30 in the form of a bypass valve that acts as a pressure regulator, in a first operating condition denoted A in connection with the outlet from a pump 31. An accumulator tank 32 is connected between the pressure regulation means 30 and the positional valve 29.

As is made clear by Figure 3, the accumulator tank 32 is drawn with a dash-dot line, in order to illustrate that it is not necessary that the circuit contain the said accumulator tank. The desired pressure P1 is applied directly through the pressure regulation means 30, which is of an adjustable type.

The piston-cylinder device 25 has a second chamber that is, with a connection 33, a line 34 and a bypass valve 35, in connection with a storage tank 36. It is appropriate that the accumulator tank is of spring or bladder accumulator type, and that it has the ability to offer not only a spring effect but also the storage of energy. In condition A, the piston rod of the piston-cylinder device 25 is displaced out from the cylinder, whereby the pivotable arm 20 and thus also the tracker wheel 22 move from the upper inactive position down to a position in contact with and in interaction with the ground. When the piston-cylinder device 25 has reached an extended condition, the tracker wheel 22 has achieved its operating position, i.e. in contact with the ground for spring-loaded interaction with it. The pressure of the tracker wheel 22 against the ground is principally determined by the pressure regulation means 30 and the pressure P1 that acts against the piston side of the piston-cylinder device 25 in combination, in certain operating conditions, with the internal spring force of the accumulator tank 32. In the operating position, the pivotable arm 20 and the tracker wheel 22 are located at an angle α1 that amounts to approximately 50° from the initial position.

The diagram in Figure 4 shows schematically how the ground pressure projected against the ground varies with angle α, whereby the ground pressure in the operating condition amounts to approximately 0.3 kg/cm², which lies, in practice, at a level that makes it possible to avoid damage to the ground when this is soft.

Once again with reference to Figure 3, the dash-dot line illustrates a surveillance system 37 that makes it possible to achieve an active and dynamic regulation of the properties of the pivotable arm 20 and thus also of the tracker wheel 22 at the first operating condition A. While the operating condition described above is manually passive and has operating properties that are set by an operator in the control cabin 6, based on nominal values that have been determined in advance, it is desirable in certain cases that the operating condition can be instantaneously or adaptively varied at each deviation that is detected from a nominally set value. A number of different parameters that influence the supportive properties of each half-track assembly 15, and thus also the behaviour of the complete machine, are configured during active control, depending on measurement results that are obtained from one or several sensors at the machine and that are compared with preset nominal values.

In the active control and regulatory systems shown here as an example, a pressure sensor 38 is included, which is connected to the hydraulic system in order to measure the pressure of the medium in the hydraulic line 27 and thus also the operating pressure on the piston side of the piston-cylinder device 25. The pressure sensor 38 can emit a pressure signal that represents the current hydraulic pressure. The surveillance system 37 comprises further a control unit 39 for the reception of pressure signals, which control unit comprises a processing unit 40, such as a processor or a CPU, for the processing of pressure signals that are received. The processing unit 40 is in connection with a memory unit 41 in which information can be stored and programs related to deviations from the nominal pressure values that have been detected can be retrieved and executed in the processing unit. A control panel 42 is placed in the control cabin 6 with switches that are in connection with the processing unit 40, with which switches it is possible to engage and disengage the active control by the surveillance system 37. When the function is activated in the "On" condition, the fact that the surveillance system 37 has been engaged is indicated with an illuminated symbol on the control panel.

In the first operating condition A, when the pivotable arm 20 and thus also the tracker wheel 22 are located in a lower condition, in interaction with the ground and supporting the machine, and when the machine is stationary, the pressure signal from the pressure sensor 38 represents the static load on the relevant tracker wheel 22 of the machine and on the half-track assembly 15 that is thus formed. If the machine is stationary on flat ground and the load is evenly distributed, the pressure signal from the pressure sensor 38 will principally be equal to the pressure signals from the corresponding sensors that are components of the other three half-track assemblies 15 of the machine, which other sensors are only suggested in the drawing. These static values are known as the "nominal values". The corresponding other pressure sensors 38 are shown for the sake of simplicity only suggested in the drawing, while all of them are connected to the control unit 39. When the machine is driven in terrain or the crane 7 is manipulating load, however, the pressure signals will, as a consequence of dynamic effects, such as oscillation of the machine, that arise, take on values that will be higher than the static load and that will, at least at certain times, differ and deviate from the nominal value.

Through the choice of an appropriate control program in the processing unit 40, depending on the deviations from a nominal pressure value, the oscillations of the machine can be counteracted or balanced in an adaptive manner through adjustment of the parameters of the pressure P1 at the piston side of the piston-cylinder device 25. By increasing or reducing the said pressure P1, depending on deviations from the nominal value, the force of the tracker wheels 22 against the ground can be configured in an appropriate manner. By regulating the said pressure P1, it is possible, for example, for the tracker wheel 22 of the machine that is instantaneously placed under the greatest load, to be placed by the influence of the pressure regulation means 30 in contact with the ground under a larger force, and thus the oscillation of the machine can be reduced.

Figure 3 shows a second operating condition, a neutral condition denoted "B", in which all flow pathways are closed, whereby the piston rod of the piston-cylinder device 25 piston is locked. The system in condition B has adopted a parking condition, whereby the pivotable arm 20 and thus also the tracker wheel 22 are locked, i.e. not able to pivot around the bearing 21 and thus not able to pivot relative to the wheel axle 12 and the chassis of the vehicle.

In a third operating condition denoted "C", the first chamber of the piston-cylinder device 25 is in contact with the storage tank 36 through the connection 26, the line 27 and the bypass valve 28, while the second chamber of the piston-cylinder device is in contact with the outlet from the pump 31, through the connection 33, the line 34, the bypass valve 35, the electrical positional valve 29, and the accumulator tank 32, which is located between the pressure-regulating valve and the directional valve. In condition C, the piston rod of the piston-cylinder device 25 is displaced into the cylinder, whereby the tracker wheel 22 moves upwards from the lower operating condition to the upper inactive position. With reference to the diagram in Figure 4, it is clear that when the tracker wheel 22 is located in the upper inactive position the ground pressure amounts to approximately 0.7 kg/cm², which is relatively high and corresponds in practice to that of a forestry machine in conventional single-axle execution and the absence of the present arrangement.

Through choice of internal pressure P1 against the piston side of the piston-cylinder device 25, the pivotable arm 20, the tracker wheel 22 and thus also the track 24 can be placed in contact with the ground with a pre-determined force, which has, obviously, major significance for the maintenance of a low ground pressure when the forestry machine moves across uneven terrain or in the cases in which there is a need for improved stability. The latter is of special significance when the crane is used at the same time as the forestry machine is located on ground with a limited support strength, whereby it has proved to be suitable to achieve maximum stability by locking the tracker wheel 22 to the chassis in operating condition B. In a similar manner to other hydraulic systems, the condition of the pivotable arm 20, and thus also the operating condition A, B, C of the half-track units 15:1; 15:2, are controlled and regulated between the passive and active conditions directly from the driver's location in the vehicle cabin 6.

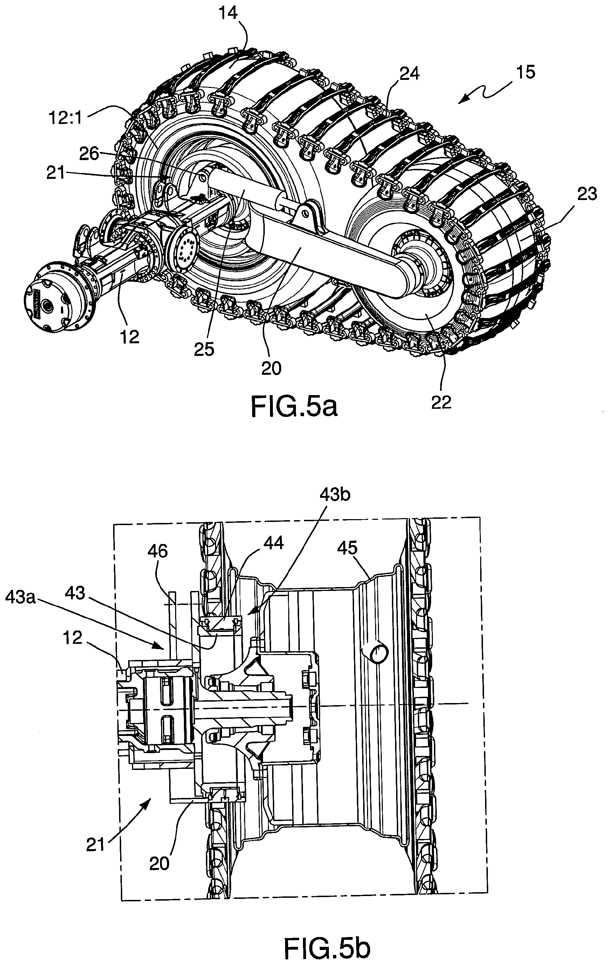

The bearing 21 between the pivotable arm 20 and the wheel axle 12 of the forestry machine is shown in a first embodiment in Figures 5a and 5b, which bearing allows the tracker wheel 22 of the pivotable arm to pivot along the arc of a circle that is concentric with the wheel axle 12, i.e. with coinciding axes. This has the advantage that the track tension remains constant, independent of the angular position α of the pivotable arm. Due to the fact that the pivot point of the pivotable arm 20 lies at the centre of the wheel axle 12, the pressure of the tracker wheel 22 against the ground will be constant, independent of the condition of the ground surface.

The bearing 21 comprises a hub with an internal ring-shaped member 43 and an external ring-shaped member 44, that are coaxially arranged at the internal member in order to form a bearing. The internal member 43 forms part of a housing for the arrangement and includes two housing parts 43a, 43b of which one internal housing part 43a similar to a bracket is attached to the surrounding cover or housing of the wheel axle, and an external ring-shaped housing part 43b that is located at the outer end of the wheel axle 12 protrudes a certain distance into a ring-shaped hollow compartment that is limited outwards in the radial direction by the rim 44 of the driving wheel 12:1. The external housing part 44 is ring-shaped and attached at the surrounding inner surface of the rim 45. The ring-shaped members 43, 44 meet each other in the housing in a ring-shaped space equipped with a sliding bearing. The housing part 43a that is similar to a bracket is designed with a cylinder attachment 46 for one end of the piston-cylinder device 25, the second end of which is united with a piston rod attachment 47 at the pivotable arm 20. One of the major advantages with mounting the pivotable arm 20 and the piston-cylinder device 25 immediately on the wheel axle 12 instead of on the framework section 2 of the forestry machine is that this makes it possible to use a half-track unit 15:1, 15:2 of the present design also on an oscillating, suspended wheel axle 13.

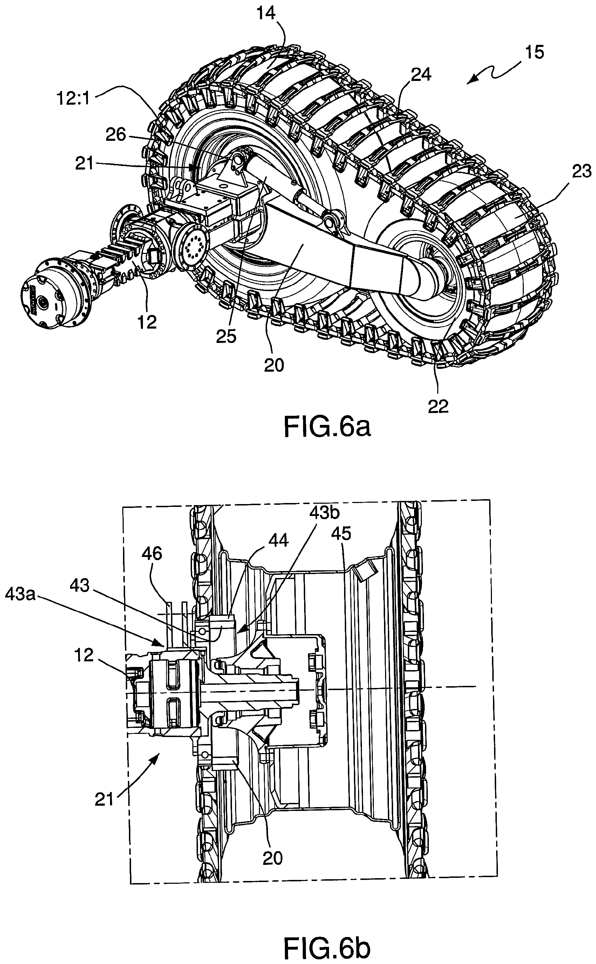

Figures 6a and 6b show the bearing storage 21 between the pivotable arm 20 and the wheel axle 12 of the forestry machine in a second embodiment. This design corresponds in all significant details with the design that has been described above, but differs in that the bearing comprises rollers.

When mounted on a terrain-going articulated vehicle, the present drive arrangement functions in the following manner: With the drive arrangement set to operating condition A, the angle α1 between the upper and lower conditions of the pivotable arm are defined. As the pivotable arm 20 is lowered downwards from the upper inactive position, the track gradually increases its active or projected area against the ground. The tracker wheel 22 and the part of the track 24 that is projected against the ground are now in contact with the ground with a certain, defined force. When driving across uneven terrain or when the tracker wheel 22 rolls over an impediment, stone, tree stump or similar the said angle will become somewhat smaller. When the tracker wheel 22 rolls down into a depression, a second working mode arises in which the pivotable arm is allowed to be set at an angle further downwards, with an angle denoted α2. When the pivotable arm 20 and thus also the tracker wheel 22 are in their raised inactive positions, as is illustrated with dash-dot lines in Figure 1, the ground pressure is relatively high and is essentially comparable with that of a conventional machine that rests immediately on the ground with conventional air-filled tyres.

The present invention is not limited to that which has been described above and shown in the drawings: it can be changed and modified in several different ways within the scope of the innovative concept defined by the attached patent claims.

## Claims

1. An arrangement for a terrain-going motor vehicle (1) that has a chassis with a forward wheel axle (12) with a driving pair of wheels (12:1) and a rear wheel axle (13) with a driving pair of wheels (13:1), a half-track unit (15:1, 15:2) arranged at any one of the of said driven wheel axles (12, 13) with parallel half-track assemblies (15) located at a distance from each other that interact with the ground on which the motor vehicle is being driven, **characterised in that** each half-track assembly (15) comprises:
a pivotable arm (20) that supports at one of its ends a tracker wheel (22), and that is so mounted to pivot attached through a joint (21) at the chassis at its other end that the tracker wheel can pivot in a vertical plane central to one of the driving wheels (12:1; 13:1) of the wheel axle (12),
a continuous track (24) arranged to run around the tracker wheel (22) and the driving wheel (12:1; 13:1) of the wheel axle,
a hydraulic system including a piston-cylinder device (25) that can be set into alternative conditions through the influence of a hydraulic medium under pressure and which piston-cylinder device is united at one end to the chassis through a joint and united at the second end with the pivotable arm (20) for the setting of the latter into angular positions (α) that include not only an inactive position directed upwards from the ground, but also an operating condition directed downwards towards the ground,
a positional valve (29) that can be set into different operating conditions, which valve when set to:
a first operating condition (A) allows hydraulic medium under pressure to be led to the piston-cylinder device (25) for the setting of the pivotable arm (20) and thus also the tracker wheel (22) to the lower operating condition and in interaction with the support,
a third operating condition (C) allows hydraulic medium under pressure to be led from the piston-cylinder device (25) for the setting of the pivotable arm (20) and thus also the tracker wheel (22) to the upper inactive position and away from interaction with the ground,
whereby the tracker wheel (22) is placed in the first operating condition (A) in contact with the ground at a pre-determined force that is determined by the selected internal pressure (P1) of the hydraulic medium.

2. The arrangement according to claim 1, comprising a second operating condition (B) whereby the flow pathways to the piston-cylinder device (25) are closed and that the pivotable arm (20) is in this way locked (unable to pivot) to the chassis.

3. The arrangement according to any one of claims 1-2, whereby the motor vehicle (1) is of the type whose chassis has forward and rear framework sections (2, 3) that are united to each other through a central articulated joint (4), where the forward wheel axle (2) with the driving pair of wheels (12:1) is mounted at the forward framework section and the rear wheel axle (13) with the driving pair of wheels (13:1) is mounted at the rear framework section, whereby the pivotable arm (20) is so mounted to pivot in each half-track assembly (15) through the joint (21) that the tracker wheel (22) can pivot either in a vertical plane centrally in front of one of the driving wheels (12:1) of the forward wheel axle or centrally behind one of the driving wheels (13:1) of the rear drive shaft (13) with respect to the centrally located articulated joint (4) and the normal forwards direction of travel of the motor vehicle.

4. The arrangement according to any one of claims 1-3, whereby not only the pivotable arm (20) but also the piston-cylinder device (25) are mounted to pivot at the wheel axle (12) of the chassis where the bearing (21) between the pivotable arm and the wheel axle is so designed, through a hub arranged at the wheel axle with coaxially arranged internal and external ring-shaped bearing bodies (43, 44), that the tracker wheel (22) can be pivoted along the arc of a circle whose centre is concentric with the wheel axle (12), such that the track tension remains constant independently of the angular position (α) of the pivotable arm.

5. The arrangement according to any one of claims 1-4, comprising a surveillance system (37) that allows active adaptive regulation of the operating properties of the pivotable arm (20) in the first operating condition (A), and which system comprises a pressure sensor (38) arranged at each piston-cylinder device (25) arranged to monitor the internal pressure (P1), a control unit (39) for the reception and analysis of pressure signals from the pressure sensors, a processing unit (40) such as a processor or CPU for the processing of pressure signals that have been received and which processing unit can communicate with the control means (30) for the setting of the latter, a memory unit (41) connected to the processing unit from which memory unit programs related to deviations from a nominal pre-determined pressure value that have been detected can be retrieved and executed in the processing unit in order to adjust the parameters of the pressure (P1) at the piston side of the piston-cylinder device (25).

6. A terrain-going motor vehicle (1) comprising a chassis with forward and rear framework sections (2, 3) that are united to each other through a central articulated joint (4), a forward wheel axle (2) with a driving pair of wheels (12:1) mounted at the forward framework section and a rear wheel axle (13) with a driving pair of wheels (13:1) mounted at the rear framework section, a half-track unit (15:1; 15:2) arranged at any one of the said driven wheel axles (12, 13) with parallel half-track assemblies (15) located at a sideways distance from each other, **characterised in that** the half-track unit (15:1; 15:2) is oriented in the longitudinal direction out from the machine with respect to its centre or articulated joint (4) and that each half-track assembly (15) can be individually displaced and comprises
a pivotable arm (20) that supports at one of its ends a tracker wheel (22) and that is so mounted to pivot attached through a joint at the chassis at its other end that the tracker wheel can pivot in a vertical plane central to one of the driving wheels (12:1; 13:1) of the wheel axle (12),
a continuous track (24) arranged to run around the tracker wheel (22) and the driving wheel (12:1; 13:1) of the wheel axle,
a hydraulic system including a piston-cylinder device (25) that can be set into alternative conditions through the influence of a hydraulic medium under pressure and which piston-cylinder device is united at one end to the chassis through a joint and united at the second end with the pivotable arm for the setting of the pivotable arm at angular positions (α) that include not only an inactive position directed upwards from the ground, but also an operating condition directed downwards towards the ground,
a positional valve (29) that can be set into different operating conditions, which valve when set to:
a first operating condition (A) allows hydraulic medium under pressure to be led to the piston-cylinder device (25) for the setting of the pivotable arm (20) and thus also the tracker wheel (22) to the lower operating condition and in interaction with the support,
a third operating condition (C) allows hydraulic medium under pressure to be led from the piston-cylinder device (25) for the setting of the pivotable arm (20) and thus also the tracker wheel (22) to the upper inactive position and away from interaction with the ground,
whereby the tracker wheel (22) is placed in the first operating condition (A) in contact with the ground at a pre-determined force, which force is determined by the selected internal pressure (P1) of the accumulator tank (32).

7. The terrain-going motor vehicle according to claim 6, comprising a second operating condition (B) whereby the flow pathways to the piston-cylinder device (25) are closed and the pivotable arm (20) is locked (unable to pivot) to the chassis.

8. The terrain-going articulated motor vehicle (1) according to any one of claims 6-7, comprising a first half-track unit (15:1) arranged at the first driven wheel axle (12) with a driving pair of wheels (12:1) mounted at the forward framework section (2), a second half-track unit (15:2) arranged at the second driven wheel axle (13) with a driving pair of wheels (13:1) mounted at the rear framework section (3), and which half-track units 15:1 and 15:2 are directed forwards and backwards, respectively, along the longitudinal direction of the machine, in a direction out from the machine with respect to its centre or articulated joint (4).

9. The terrain-going articulated motor vehicle according to any one of claims 6-8, whereby one of the driven wheel axles (13) comprises an oscillating wheel axle and that not only the pivotable arm (20) but also the piston-cylinder device (25) are mounted to pivot at the oscillating wheel axle (12) of the chassis where the bearing (21) between the pivotable arm and the wheel axle is so designed, through a hub arranged at the wheel axle with coaxially arranged internal and external ring-shaped bearing bodies (43, 44), that the tracker wheel (22) can be pivoted along the arc of a circle whose centre is concentric with the wheel axle (12), such that the track tension remains constant independently of the angular position (α) of the pivotable arm.

10. The terrain-going articulated motor vehicle according to any one of claims 6-9, whereby the setting of the positional valve (29) of the hydraulic system to different operating conditions (A, B, C) can be carried out by an operator who is located in a driver's position in a driver's cabin (6) that is a component of the motor vehicle.

11. The terrain-going articulated motor vehicle according to any one of claims 6-10, comprising a forestry machine such as a harvester or forwarder, one framework section (2) of which is equipped with a crane (7) that can be manoeuvred and that is equipped at its free end with a tree-processing unit, such as a harvester head or a timber gripper.

12. The terrain-going articulated vehicle according to any one of claims 6-11, comprising a surveillance system (37) that allows active adaptive regulation of the operating properties of the pivotable arm (20) in the first operating condition (A), and which system comprises a pressure sensor (38) arranged at each piston-cylinder device (25) arranged to monitor the internal pressure (P1), a control unit (39) for the reception and analysis of pressure signals from the pressure sensors, a processing unit (40) such as a processor or CPU for the processing of pressure signals that have been received and which processing unit can communicate with the control means (30) for the setting of this, a memory unit (41) connected to the processing unit from which memory unit programs related to deviations that have been detected from a nominal pre-determined pressure value can be retrieved and executed in the processing unit in order to adjust the parameters of the pressure (P1) at the piston side of the piston-cylinder device (25).

## Patentansprüche

1. Anordnung für ein Geländekraftfahrzeug (1), das ein Fahrgestell mit einer Vorderradachse (12) mit einem Antriebsradpaar (12:1) und einer Hinterradachse (13) mit einem Antriebsradpaar (13:1), eine Halbketteneinheit (15:1, 15:2), die an einer der angetriebenen Radachsen (12, 13) angeordnet ist, mit parallelen Halbkettenbaugruppen (15) aufweist, die sich in einem Abstand voneinander befinden und mit dem Fahrgrund, auf dem das Kraftfahrzeug gefahren wird, zusammenwirken, **dadurch gekennzeichnet, dass** jede Halbkettenbaugruppe (15) Folgendes umfasst:
einen Schwenkarm (20), der an einem seiner Enden ein Nachführrad (22) trägt und so montiert ist, dass er durch eine Verbindung (21) am Fahrgestell an seinem anderen Ende schwenkbar befestigt ist, so dass das Tracker-Rad in einer vertikalen Ebene mittig zu einem der Antriebsräder (12:1; 13:1) der Radachse (12) schwenken kann,
eine kontinuierliche Spur (24), die so angeordnet ist, dass sie um das Nachführrad (22) und das Antriebsrad (12:1; 13:1) der Radachse herumläuft,
ein Hydrauliksystem mit einer Kolben-Zylinder-Vorrichtung (25), die durch den Einfluss eines druckbeaufschlagten Hydraulikmediums in alternative Zustände versetzt werden kann, und die an einem Ende mit dem Fahrgestell durch eine Verbindung und am zweiten Ende mit dem Schwenkarm (20) zum Einstellen desselben in Winkellagen (α) verbunden ist, die nicht nur eine vom Boden nach oben gerichtete inaktive Stellung beinhalten, sondern auch ein Betriebszustand, der nach unten zum Boden gerichtet ist,
ein Positionsventil (29), das in verschiedene Betriebszustände einstellbar ist, wobei das Ventil:
wenn es auf einen ersten Betriebszustand (A) eingestellt ist, es ermöglicht, das druckbeaufschlagte Hydraulikmedium zur Kolben-Zylinder-Vorrichtung (25) zum Einstellen des schwenkbaren Arms (20) und damit auch des Nachführrades (22) in den niedrigeren Betriebszustand und in Wechselwirkung mit dem Träger zu führen,
wenn es auf einen dritten Betriebszustand (C) eingestellt ist, es ermöglicht, das druckbeaufschlagte Hydraulikmedium von der Kolben-Zylinder-Vorrichtung (25) zum Einstellen des schwenkbaren Arms (20) und damit auch des Nachführrades (22) in die obere inaktive Stellung und weg von der Wechselwirkung mit dem Boden zu führen,
wobei das Nachführrad (22) im ersten Betriebszustand (A) mit einer vorbestimmten Kraft, die durch den gewählten Innendruck (P1) des Hydraulikmediums bestimmt wird, in Kontakt mit dem Boden gebracht wird.

2. Anordnung nach Anspruch 1, umfassend einen zweiten Betriebszustand (B), wobei die Strömungswege zur Kolben-Zylinder-Vorrichtung (25) geschlossen sind, und dass der Schwenkarm (20) auf diese Weise am Fahrgestell verriegelt (schwenkunfähig) ist.

3. Anordnung nach einem der Ansprüche 1 bis 2, wobei das Kraftfahrzeug (1) von dem Typ ist, dessen Fahrgestell vordere und hintere Rahmenabschnitte (2, 3) aufweist, die durch eine zentrale Gelenkverbindung (4) miteinander verbunden sind, wobei die Vorderradachse (2) mit dem Antriebsradpaar (12:1) am vorderen Rahmenabschnitt montiert ist und die Hinterradachse (13) mit dem Antriebsradpaar (13:1) am hinteren Rahmenabschnitt montiert ist, wobei der Schwenkarm (20) so montiert ist, dass er in jeder Halbkettenbaugruppe (15) durch die Verbindung (21) schwenkbar ist, dass das Nachführrad (22) entweder in einer vertikalen Ebene zentral vor einem der Antriebsräder (12:1) der Vorderradachse schwenken kann oder zentral hinter einem der Antriebsräder (13:1) der hinteren Antriebswelle (13) in Bezug auf die zentral angeordnete Gelenkverbindung (4) und die normale Vorwärtsfahrtrichtung des Kraftfahrzeugs.

4. Anordnung nach einem der Ansprüche 1 bis 3, wobei nicht nur der Schwenkarm (20), sondern auch die Kolben-Zylinder-Vorrichtung (25) an der Radachse (12) des Fahrgestells schwenkbar montiert ist, wobei das Lager (21) zwischen dem Schwenkarm und der Radachse so ausgebildet ist, durch eine an der Radachse angeordnete Nabe mit koaxial angeordneten inneren und äußeren ringförmigen Lagerkörpern (43, 44), dass das Nachführrad (22) entlang des Bogens eines Kreises schwenkbar ist, dessen Mittelpunkt konzentrisch zur Radachse (12) ist, so dass die Spurspannung unabhängig von der Winkellage (α) des Schwenkarms konstant bleibt.

5. Anordnung nach einem der Ansprüche 1 bis 4, umfassend ein Überwachungssystem (37), das eine aktive adaptive Regelung der Betriebseigenschaften des Schwenkarms (20) im ersten Betriebszustand (A) ermöglicht, und wobei das System einen Drucksensor (38) umfasst, der an jeder Kolben-Zylinder-Vorrichtung (25) angeordnet ist, die zur Überwachung des Innendrucks (P1) angeordnet ist, eine Steuereinheit (39) zum Empfangen und Analysieren von Drucksignalen von den Drucksensoren, eine Verarbeitungseinheit (40), wie beispielsweise einen Prozessor oder eine CPU, zur Verarbeitung von empfangenen Drucksignalen, wobei die Verarbeitungseinheit mit den Steuermitteln (30) zur Einstellung derselben kommunizieren kann, eine mit der Verarbeitungseinheit verbundene Speichereinheit (41), von der aus Programme der Speichereinheit abgerufen und in der Verarbeitungseinheit ausgeführt werden können, die sich auf Abweichungen beziehen, die von einem vorbestimmten Soll-Druckwert erfasst wurden, um die Parameter des Drucks (P1) auf der Kolbenseite der Kolben-Zylinder-Vorrichtung (25) anzupassen.

6. Geländekraftfahrzeug (1), umfassend ein Fahrgestell mit vorderen und hinteren Rahmenabschnitten (2, 3), die durch eine zentrale Gelenkverbindung (4) miteinander verbunden sind, eine Vorderradachse (2) mit einem Antriebsradpaar (12:1), das an dem vorderen Rahmenabschnitt montiert ist, und eine Hinterradachse (13) mit einem Antriebsradpaar (13:1), das an dem hinteren Rahmenabschnitt montiert ist, eine Halbketteneinheit (15:1; 15:2), die an einer der angetriebenen Radachsen (12, 13) mit parallelen Halbkettenbaugruppen (15) angeordnet ist, die sich in einem seitlichen Abstand voneinander befinden, **dadurch gekennzeichnet, dass** die Halbketteneinheit (15:1; 15:2) in Längsrichtung aus der Maschine in Bezug auf ihre Mitte oder Gelenkverbindung (4) heraus ausgerichtet ist und dass jede Halbkettenbaugruppe (15) einzeln verschiebbar ist und Folgendes umfasst
einen Schwenkarm (20), der an einem seiner Enden ein Nachführrad (22) trägt und so montiert ist, dass er durch eine Verbindung am Fahrgestell an seinem anderen Ende schwenkbar befestigt ist, so dass das Nachführrad in einer vertikalen Ebene mittig zu einem der Antriebsräder (12:1; 13:1) der Radachse (12) schwenken kann,
eine kontinuierliche Spur (24), die so angeordnet ist, dass sie um das Nachführrad (22) und das Antriebsrad (12:1; 13:1) der Radachse herumläuft,
ein Hydrauliksystem mit einer Kolben-Zylinder-Vorrichtung (25), die durch den Einfluss eines druckbeaufschlagten Hydraulikmediums in alternative Zustände versetzt werden kann und die an einem Ende mit dem Fahrgestell durch eine Verbindung und am zweiten Ende mit dem Schwenkarm zum Einstellen des Schwenkarms in Winkellagen (α) verbunden ist, die nicht nur eine vom Boden nach oben gerichtete inaktive Stellung beinhalten, sondern auch ein Betriebszustand, der nach unten zum Boden gerichtet ist,
ein Positionsventil (29), das in verschiedene Betriebszustände einstellbar ist, wobei das Ventil:
wenn es auf einen ersten Betriebszustand (A) eingestellt ist, es ermöglicht, das druckbeaufschlagte Hydraulikmedium zur Kolben-Zylinder-Vorrichtung (25) zum Einstellen des schwenkbaren Arms (20) und damit auch des Nachführrades (22) in den niedrigeren Betriebszustand und in Wechselwirkung mit dem Träger zu führen,
wenn es auf einen dritten Betriebszustand (C) eingestellt ist, es ermöglicht, das druckbeaufschlagte Hydraulikmedium von der Kolben-Zylinder-Vorrichtung (25) zum Einstellen des schwenkbaren Arms (20) und damit auch des Nachführrades (22) in die obere inaktive Stellung und weg von der Wechselwirkung mit dem Boden zu führen,
wobei das Nachführrad (22) im ersten Betriebszustand (A) mit einer vorbestimmten Kraft, die durch den gewählten Innendruck (P1) des Speichertanks (32) bestimmt wird, in Kontakt mit dem Boden gebracht wird.

7. Geländekraftfahrzeug nach Anspruch 6, umfassend einen zweiten Betriebszustand (B), wobei die Strömungswege zur Kolben-Zylinder-Vorrichtung (25) geschlossen sind, und der Schwenkarm (20) auf diese Weise am Fahrgestell verriegelt (schwenkunfähig) ist.

8. Gelenktes Geländekraftfahrzeug (1) nach einem der Ansprüche 6 bis 7, umfassend eine erste Halbketteneinheit (15:1), die an der ersten angetriebenen Radachse (12) mit einem am vorderen Rahmenabschnitt (2) montierten Antriebsradpaar (12:1), eine zweite Halbketteneinheit (15:2) an der zweiten angetriebenen Radachse (13) mit einem am hinteren Rahmenabschnitt (3) montierten Antriebsradpaar (13:1) angeordnet ist, und die Halbketteneinheiten 15:1 und 15:2 entlang der Maschinenlängsrichtung vorwärts bzw. rückwärts in eine Richtung aus der Maschine in Bezug auf ihre Mitte oder Gelenkverbindung (4) gerichtet sind.

9. Gelenktes Geländekraftfahrzeug nach einem der Ansprüche 6 bis 8, wobei eine der angetriebenen Radachsen (13) eine oszillierende Radachse umfasst und dass nicht nur der Schwenkarm (20), sondern auch die Kolben-Zylinder-Vorrichtung (25) an der oszillierenden Radachse (12) des Fahrgestells schwenkbar montiert ist, wobei das Lager (21) zwischen dem Schwenkarm und der Radachse derart ausgebildet ist, durch eine an der Radachse angeordnete Nabe mit koaxial angeordneten inneren und äußeren ringförmigen Lagerkörpern (43, 44), dass das Nachführrad (22) entlang des Bogens eines Kreises schwenkbar ist, dessen Mittelpunkt konzentrisch zur Radachse (12) ist, so dass die Spurspannung unabhängig von der Winkellage (α) des Schwenkarms konstant bleibt.

10. Gelenktes Geländekraftfahrzeug nach einem der Ansprüche 6 bis 9, wobei die Einstellung des Positionsventils (29) des Hydrauliksystems auf unterschiedliche Betriebszustände (A, B, C) von einem Bediener vorgenommen werden kann, der sich in einem Führerstand in einer Fahrerkabine (6), die Bestandteil des Kraftfahrzeugs ist, befindet.

11. Gelenktes Geländekraftfahrzeug nach einem der Ansprüche 6 bis 10, umfassend eine Forstmaschine, wie beispielsweise eine Erntemaschine oder eine Fördermaschine, von denen ein Rahmenabschnitt (2) mit einem manövrierfähigen Kran (7) ausgestattet ist, der an seinem freien Ende mit einer Baumbearbeitungseinheit, wie beispielsweise einem Erntevorsatz oder einem Holzgreifer, ausgestattet ist.

12. Gelenktes Geländekraftfahrzeug nach einem der Ansprüche 6 bis 11, umfassend ein Überwachungssystem (37), das eine aktive adaptive Regelung der Betriebseigenschaften des Schwenkarms (20) im ersten Betriebszustand (A) ermöglicht, und wobei das System einen Drucksensor (38) umfasst, der an jeder Kolben-Zylinder-Vorrichtung (25) angeordnet ist, die zur Überwachung des Innendrucks (P1) angeordnet ist, eine Steuereinheit (39) zum Empfangen und Analysieren von Drucksignalen von den Drucksensoren, eine Verarbeitungseinheit (40), wie beispielsweise einen Prozessor oder eine CPU, zur Verarbeitung von empfangenen Drucksignalen, wobei die Verarbeitungseinheit mit den Steuermitteln (30) zur Einstellung dieser kommunizieren kann, eine mit der Verarbeitungseinheit verbundene Speichereinheit (41), von der aus Programme der Speichereinheit abgerufen und in der Verarbeitungseinheit ausgeführt werden können, die sich auf Abweichungen beziehen, die von einem vorbestimmten Soll-Druckwert erfasst wurden, um die Parameter des Drucks (P1) auf der Kolbenseite der Kolben-Zylinder-Vorrichtung (25) anzupassen.

## Revendications

1. Dispositif pour un véhicule motorisé tout terrain (1) équipé d'un châssis avec un essieu de roue avant (12) avec une paire de roues motrices (12:1) et un essieu de roue arrière (13) avec une paire de roues motrices (13:1), une unité à demi-chenille (15:1, 15:2) disposée sur l'un quelconque desdits essieux de roues motrices (12, 13) avec des ensembles à demi-chenille parallèles (15) situés à distance l'un de l'autre qui interagissent avec le sol sur lequel le véhicule à moteur est conduit, **caractérisé en ce que** chaque ensemble à demi-chenille (15) comprend :
un bras pivotant (20) supportant à l'une de ses extrémités une roue de suivi (22), et qui est monté de manière à pivoter attaché par un joint (21) au niveau du châssis à son autre extrémité si bien que la roue de suivi peut pivoter dans un plan vertical central à l'une des roues motrices (12:1; 13:1) de l'essieu de roue (12),
une piste continue (24) agencée autour de la roue de suivi (22) et de la roue motrice (12:1; 13:1) de l'essieu de roue,
un système hydraulique comprenant un dispositif piston-cylindre (25) pouvant être réglé dans des conditions alternatives sous l'influence d'un fluide hydraulique sous pression et ledit dispositif piston-cylindre est réuni au niveau d'une extrémité au châssis par un joint et réuni à la deuxième extrémité au bras pivotant (20) pour le réglage de ce dernier en positions angulaires (α) qui comprennent non seulement une position inactive dirigée vers le haut depuis le sol, mais également une condition de fonctionnement dirigée vers le sol vers le bas,
une vanne de position (29) qui peut être réglée en différentes conditions de fonctionnement, ladite vanne lorsqu'elle est réglée à :
une première condition de fonctionnement (A), permet de conduire le fluide hydraulique sous pression vers le dispositif piston-cylindre (25) pour le réglage du bras pivotant (20) et donc également de la roue de suivi (22) à la condition de fonctionnement inférieure et en interaction avec le support,
une troisième condition de fonctionnement (C), permet de conduire le fluide hydraulique sous pression vers le dispositif piston-cylindre (25) pour le réglage du bras pivotant (20) et donc également de la roue de suivi (22) à la position inactive supérieure et à l'écart de l'interaction avec le sol,
la roue de suivi (22) étant placée dans la première condition de fonctionnement (A) en contact avec le sol avec une force prédéterminée qui est déterminée par la pression intérieure sélectionnée (P1) du fluide hydraulique.

2. Dispositif selon la revendication 1, comprenant une deuxième condition de fonctionnement (B) par laquelle les voies d'écoulement vers le dispositif piston-cylindre (25) sont fermées et que le bras pivotant (20) est ainsi bloqué (incapable de pivoter) vers le châssis.

3. Dispositif selon l'une quelconque des revendications 1 à 2, dans lequel le véhicule à moteur (1) est du type dont le châssis comporte des sections de châssis avant et arrière (2, 3) reliées entre elles par une articulation centrale (4), où l'essieu de la roue avant (2) avec la paire de roues motrices (12:1) est monté à la section de châssis avant et l'essieu de la roue arrière (13) avec la paire de roues motrices (13:1) est monté sur la section de châssis arrière, le bras pivotant (20) étant monté de manière à pivoter dans chaque ensemble à demi-chenille (15) à travers le joint (21) si bien que la roue de suivi (22) peut pivoter soit dans un plan vertical centralement devant l'une des roues motrices (12:1) de l'essieu de la roue avant ou centralement derrière l'une des roues motrices (13:1) de l'essieu d'entraînement arrière (13) par rapport à l'articulation articulée centrale (4) et à la direction avant normale de déplacement du véhicule automobile.

4. Dispositif selon l'une quelconque des revendications 1 à 3, dans lequel non seulement le bras pivotant (20) mais également le dispositif piston-cylindre (25) sont montés pour pivoter au niveau de l'essieu de roue (12) du châssis où le palier (21) entre le bras pivotant et l'essieu de roue est conçu, à travers un moyeu disposé sur l'essieu de roue avec des corps de palier annulaires internes et externes (43, 44) disposés coaxialement, si bien que la roue de suivi (22) peut pivoter le long de l'arc d'un cercle dont le centre est concentrique à l'essieu de roue (12), de sorte que la tension de voie reste constante indépendamment de la position angulaire (α) du bras pivotant.

5. Dispositif selon l'une quelconque des revendications 1 à 4, comprenant un système de surveillance (37) qui permet une régulation adaptative active des propriétés de fonctionnement du bras pivotant (20) dans la première condition de fonctionnement (A), et ledit système comprend un capteur de pression (38) agencé au niveau de chaque dispositif piston-cylindre (25) agencé pour surveiller la pression intérieure (P1), une unité de commande (39) pour la réception et l'analyse des signaux de pression provenant des capteurs de pression, une unité de traitement (40) en tant que processeur ou unité centrale pour le traitement de signaux de pression reçus, et unité de traitement qui peut communiquer avec le moyen de commande (30) pour le réglage de cette dernière, une unité de mémoire (41) connectée à l'unité de traitement à partir de laquelle des programmes relatifs aux écarts par rapport à une valeur de pression nominale prédéterminée qui ont été détectés peuvent être récupérés et exécutés dans l'unité de traitement afin d'ajuster les paramètres de la pression (P1) du côté du piston du dispositif piston-cylindre (25).

6. Véhicule motorisé tout terrain (1) comprenant un châssis avec des sections de châssis avant et arrière (2, 3) reliées entre elles par une articulation centrale (4), un essieu de la roue avant (2) avec la paire de roues motrices (12:1) étant monté à la section de châssis avant et un essieu de la roue arrière (13) avec une paire de roues motrices (13:1) étant monté sur la section de châssis arrière, une unité à demi-chenille (15:1, 15:2) disposée sur l'un quelconque desdits essieux de roues motrices (12, 13) avec des ensembles à demi-chenille parallèles (15) situés à distance latérale l'un de l'autre, **caractérisé en ce que** l'unité à demi-chenille (15:1; 15:2) est orientée dans la direction longitudinale en dehors de la machine par rapport à son centre ou l'articulation centrale (4), et **en ce que** chaque unité à demi-chenille (15) peut être déplacée individuellement et comprend
un bras pivotant (20) supportant à l'une de ses extrémités une roue de suivi (22), et qui est monté de manière à pivoter attaché par un joint au niveau du châssis à son autre extrémité si bien que la roue de suivi peut pivoter dans un plan vertical central à l'une des roues motrices (12:1; 13:1) de l'essieu de roue (12),
une piste continue (24) agencée autour de la roue de suivi (22) et de la roue motrice (12:1; 13:1) de l'essieu de roue,
un système hydraulique comprenant un dispositif piston-cylindre (25) pouvant être réglé dans des conditions alternatives sous l'influence d'un fluide hydraulique sous pression et ledit dispositif piston-cylindre est réuni au niveau d'une extrémité au châssis par un joint et réuni à la deuxième extrémité avec le bras pivotant pour le réglage du bras pivotant en positions angulaires (α) qui comprennent non seulement une position inactive dirigée vers le haut depuis le sol, mais également une condition de fonctionnement dirigée vers le sol vers le bas,
une vanne de position (29) qui peut être réglée en différentes conditions de fonctionnement, ladite vanne lorsqu'elle est réglée à :
une première condition de fonctionnement (A), permet de conduire le fluide hydraulique sous pression vers le dispositif piston-cylindre (25) pour le réglage du bras pivotant (20) et donc également de la roue de suivi (22) à la condition de fonctionnement inférieure et en interaction avec le support,
une troisième condition de fonctionnement (C), permet de conduire le fluide hydraulique sous pression vers le dispositif piston-cylindre (25) pour le réglage du bras pivotant (20) et donc également de la roue de suivi (22) à la position inactive supérieure et à l'écart de l'interaction avec le sol,
la roue de suivi (22) étant placée dans la première condition de fonctionnement (A) en contact avec le sol avec une force prédéterminée qui est déterminée par la pression intérieure sélectionnée (P1) du réservoir d'accumulateur (32).

7. Véhicule motorisé tout terrain selon la revendication 6, comprenant une deuxième condition de fonctionnement (B) par laquelle les voies d'écoulement vers le dispositif piston-cylindre (25) sont fermées et le bras pivotant (20) est bloqué (incapable de pivoter) vers le châssis.

8. Véhicule motorisé et articulé tout terrain (1) selon l'une quelconque des revendications 6 à 7, comprenant une première unité à demi-chenille (15:1) disposée sur le premier essieu de roue entraîné (12) avec une paire de roues motrices (12:1) montée au niveau de la section de châssis avant (2), une deuxième unité à demi-chenilles (15:2) disposée au niveau du deuxième essieu de roue entraînée (13) avec une paire de roues motrices (13:1) montée au niveau de la section de châssis arrière (3), et les unités à demi-chenilles 15:1 et 15:2 sont dirigées respectivement vers l'avant et vers l'arrière, le long de la direction longitudinale de la machine, dans une direction en dehors de la machine par rapport à son centre ou à son joint articulé (4).

9. Véhicule motorisé et articulé tout terrain selon l'une quelconque des revendications 6 à 8, dans lequel l'un des essieux de roue entraînée (13) comprend un essieu de roue oscillante et que non seulement le bras pivotant (20) mais également le dispositif à piston-cylindre (25) sont montés à pivotement au niveau de l'essieu de la roue oscillante (12) du châssis où le palier (21) entre le bras pivotant et l'essieu de roue est conçu de telle manière, à travers un moyeu disposé au niveau de l'essieu de roue avec des corps de palier annulaires internes et externes (43, 44) disposés coaxialement, si bien que la roue de suivi (22) peut être pivotée le long de l'arc d'un cercle dont le centre est concentrique à l'essieu de roue (12), de sorte que la tension de voie reste constante indépendamment de la position angulaire (a) du bras pivotant.

10. Véhicule motorisé et articulé tout terrain selon l'une quelconque des revendications 6 à 9, dans lequel le réglage de la vanne de position (29) du système hydraulique selon différentes conditions de fonctionnement (A, B, C) peut être effectué par un opérateur qui se trouve dans une position de conducteur dans une cabine de conduite (6) faisant partie du véhicule motorisé.

11. Véhicule motorisé et articulé tout terrain selon l'une quelconque des revendications 6 à 10, comprenant un engin forestier tel qu'une moissonneuse ou un porteur, dont une section de châssis (2) est équipée d'une grue (7) pouvant être manoeuvrée et est équipé à son extrémité libre d'une unité de traitement des arbres, telle qu'une tête d'abattage ou une pince à bois.

12. Véhicule motorisé et articulé tout terrain selon l'une quelconque des revendications 6 à 11, comprenant un système de surveillance (37) qui permet une régulation adaptative active des propriétés de fonctionnement du bras pivotant (20) dans la première condition de fonctionnement (A), et ledit système comprend un capteur de pression (38) agencé au niveau de chaque dispositif piston-cylindre (25) agencé pour surveiller la pression intérieure (P1), une unité de commande (39) pour la réception et l'analyse des signaux de pression provenant des capteurs de pression, une unité de traitement (40) en tant que processeur ou unité centrale pour le traitement de signaux de pression reçus, et unité de traitement qui peut communiquer avec le moyen de commande (30) pour le réglage de cette dernière, une unité de mémoire (41) connectée à l'unité de traitement à partir de laquelle des programmes relatifs aux écarts qui ont été détectés à partir d'une valeur de pression nominale prédéterminée peuvent être récupérés et exécutés dans l'unité de traitement afin d'ajuster les paramètres de la pression (P1) du côté du piston du dispositif piston-cylindre (25).
